# EUROPEAN PATENT SPECIFICATION

(11) **EP 2 001 310 B1**
(45) Date of publication and mention of the grant of the patent: **24.03.2010**
(21) Application number: 07734308.5
(22) Date of filing: 03.04.2007
(51) Int. Cl.: A23L 1/29, A23L 1/10, A21D 2/00, A21D 13/00, A23L 3/00

(54) **SUPPLEMENT MIXTURE FOR DIETETIC FOOD DESTINED FOR CELIACS**
ERGÄNZUNGSMITTELMISCHUNG FÜR DIÄTISCHE NAHRUNG, DIE FÜR MENSCHEN MIT ZÖLIAKIE BESTIMMT IST
MELANGE DE COMPLEMENTS POUR ALIMENTS DIETETIQUES DESTINES AUX PERSONNES ATTEINTES DE LA MALADIE CELIAQUE

(30) Priority: 05.04.2006 IT MI20060669
(43) Date of publication of application: 17.12.2008
(73) Proprietor: Giuliani S.p.A., 20129 Milano (IT)
(72) Inventor: GIULIANI, Giammaria, I-20123 Milano (IT); BENEDUSI, Anna, I-20124 Milano (IT)
(74) Representative: De Gregori, Antonella
(86) International application number: PCT/IB2007/000989
(87) International publication number: WO 2007/113678

(56) References cited:
- WO-A-2005/025319
- US-A1- 2005 158 446

## Description

The present invention relates to a supplement mixture for dietetic food destined for celiacs.

The present invention derives from the field of dietetic food products destined for use on the part of celiacs.

In particular, the present invention relates to a supplement mixture of ingredients naturally rich in vitamins and oligo-elements for gluten-free, cereal-based dietetic food destined for celiacs.

Celiac disease is a permanent intolerance towards gluten which is revealed on a gastro-intestinal level and can be attributed to a permanent intolerance towards gluten, a complex of proteins which can be found in wheat, einkorn, kamut, barely, rye, spelt and triticum, and probably in oats.

Celiac disease is of an autoimmune origin. In celiac subjects, the intolerance to gluten is revealed with an immune response which implies the production of specific antibodies (IgA anti-tissue transglutaminase). This immune response triggers an attack at the level of the intestinal mucosa which leads to the atrophy of the intestinal villi. As the function of the villi is to absorb the nutritive principles present in ingested food, the alteration of these structures causes an alteration in the intestinal absorption which can also be heavily reflected on the health of the organism. This fact is particularly important in children who need an appropriate and balanced diet and supply of nutritive substances for their growth and development.

If not adequately treated, celiac disease can lead to malnutrition. As some nutritive substances are lost through the faeces rather than being absorbed, this can result in a vitamin deficiency in particular vitamins A, B12, D, E, K in addition to folic acid. The repeated malabsorption of fat can also be reflected in the malabsorption of calcium with the development of complications such as a certain type of renal calculi (calcium oxalate calculi) and a bone disease called osteomalacia, in which the bones become soft. Malnutrition can also cause growth problems in children and delay their development.

It has also been observed that people suffering from celiac disease who do not follow a gluten-free diet have higher probabilities of developing one of the many forms of cancer, especially intestinal lymphoma. Other long-term complications include anemia, osteoporosis and peripheral neuropathies.

There are no typical symptoms of celiac disease. Most of the people affected are subject to problems which arise in the gastro-intestinal tract, such as intermittent diarrhea, abdominal pains. The symptoms of celiac disease can also simulate those of other diseases such as an irritated colon, gastric ulcers, Crohn's disease, parasitic infections, anemia, skin disorders or nervous problems.

Celiac disease can also be manifested in less obvious ways including behaviour changes such as irritability or depression, stomach disorders, joint pains, muscular cramps, skin eczemas, mouth wounds, dental or bone disorders and movement problems of the legs and feet (neuropathies).

Some of the symptoms of malabsorption can be: weight loss, diarrhea, abdominal cramps, general weakness, foul-smelling faeces and growth difficulties.

The cause of celiac disease is at present unknown. What is certain is that it is a hereditary fault. If a person is subject to this disease, it is normally also present in 10% of close relatives. It can arise at any age even if the symptoms do not normally appear until gluten is introduced into the diet.

For reasons which are not clear, this disease often manifests itself after certain forms of trauma: for example infections, maternity, considerable stress, physical damage or surgical interventions.

There is no cure for celiac disease but it can be kept effectively under control through a change in diet. Once the glutens have been removed from the diet, the inflammation of the small intestine is reduced within a period of a few weeks.

Recovery and a significant re-growth of the villi occur after a few months in younger people and on an average within a period of 2 or 3 years in adults.

The advantages of a gluten-free diet are evident and are particularly significant in children. By following a strict diet regime, not only do the symptoms associated with celiac disease improve but also the growth itself returns to its natural physiological course.

The only way of treating and preventing the complications of this disease is through a strict gluten-free diet regime. This means avoid the assumption of food or ingredients deriving from corn, wheat, barley, rye and oats.

It has been found however that the food restrictions imposed by this diet can create exposure to a certain risk of hyponutrition and a reduced supply of vitamins.

In the current state, attempts have been made to overcome this drawback by introducing into diet regimes for celiacs, the assumption of multivitamin and/or multimineral products which are normally of a synthetic origin.

The necessity of maintaining a diet regime for an undetermined period of time, however, exposes celiacs to the risk of having to consume multivitamin compounds of a non-natural origin for the whole of their lives. The possible effects of this conditions are still not entirely known.

This situation is made worse by the fact that cereal-based dietetic products for celiacs, and consequently gluten-free, generally have a low content of vitamins and oligo-elements.

In the present state, the necessity is therefore felt of availing of gluten-free dietetic food products whose components are of a natural origin and can guarantee an adequate nutritional supply to those suffering from celiac disease.

The objective of the present invention is to provide a mixture based on products of a natural origin rich in components with an antioxidant activity which, once it has been added to the dietetic food products for celiacs, increases their preservation duration.

As the mixture of the invention has a high content of natural antioxidant substances, its use as a supplement of food products reduces degradative oxidation phenomena, limits rancidity phenomena in food and improves the preservation of the food product with time. According to the invention the uses of said mixture are envisaged in accordance with the enclosed claims 1-7.

In particular, it has been observed that the supplement mixture of the invention is naturally rich in the following components of a natural origin: iron, zinc, selenium, magnesium, iodine, vitamins of group B, comprising B12, vitamin E, folic acid.

The presence in the additive mixture of the invention of various micro-elements with an antioxidant activity helps to prolong the shelf-life of oven products and integral products for celiac disease in which the presence of germs easily leads to the formation of oxidized compounds with a consequent development of foreign odours and flavours.

According to an embodiment, the additive mixture of the invention is added in a quantity ranging from 2-5% by weight with respect to the dietetic product so as not to interfere in the productive process and alter its taste.

The additive mixture of the invention can be typically added to any gluten-free dietetic food product, destined for celiacs, such as, for example, bread, biscuits, toasted bread, "grissini", pizzas, pasta, snacks, cakes and flour kits for dough for preparing oven products in general.

The mixture of the invention is suitable as an additive and/or supplement for doughs for the preparation of dietetic products, in particular cereal-based, for celiacs. The mixture of the invention is conveniently added to the dough and amalgamated to have a substantially uniform distribution of the active principles.

According to an embodiment, the mixture of the invention can be mixed directly with the flours before the addition of water to form the dough which is sent for baking in an oven.

The mixtures of the invention are conveniently in the form of flour have a suitable particle-size and compatible with the processing techniques of the cereal-based products to which they are added to integrate the vitamin and oligomineral content.

The following examples are provided for purely illustrative purposes of the present invention and should not be considered as limiting the protection scope as specified in the enclosed claims.

### Example 1

Additive mixture based on products naturally rich in vitamins and oligo-elements, for dietetic food for celiacs, of the invention having the following composition:

| | |
|---|---|
| Defatted sunflower flour | 10-40% |
| Linseed flour | 10-40% |
| Dried yeast | 30-60% |

### Example 2

Additive mixture with the following composition:

| | |
|---|---|
| Teff flour | 20-30% |
| Sorghum flour | 20-30% |
| Buckwheat | 5-10% |
| Dried yeast | 30-60% |

### Example 3

Preparation of a mixture based on products naturally rich in vitamins and oligo-elements with the following composition:

| | |
|---|---|
| Quinoa flour | 20-30% |
| Cassava flour | 20-30% |
| Buckwheat | 5-10% |
| Dried yeast | 30-60% |

### Example 4

### Dough for gluten-free bread

| Ingredient | % |
|---|---|
| Linseed flour | 1-3 |
| Sunflower-seed flour | 0.25-2 |
| Dried yeast | 1-3 |
| Cassava flour | 3-7 |
| Maize starch | 25-30 |
| Potato starch | 7-14 |
| Glucose syrup | 3.5-7 |
| Sugar | 2-4 |
| Xanthan gum | 0.2-0.6 |
| Palm oil | 3-9 |
| Salt | 1-2 |
| Brewer's yeast | 1-2 |
| Soy lecithin | 0.8-1.4 |
| Water | 40-60 |

### Example 5

### Dough for gluten-free bread

| Ingredient | % |
|---|---|
| Linseed flour | 1-3 |
| Integral rice flour | 4-6 |
| Quinoa flour | 3-5 |
| Dried yeast | 1-3 |
| Maize starch | 25-30 |
| Potato starch | 7-14 |
| Glucose syrup | 3.5-7 |
| Sugar | 2-4 |
| Hydroxypropylmethylcellulose | 0.2-0.6 |
| Palm oil | 3-9 |
| Salt | 1-2 |
| Brewer's yeast | 1-2 |
| Soy lecithin | 0.8-1.4 |
| Water | 40-60 |

### Example 6

### Dough for gluten-free bread

| Ingredient | % |
|---|---|
| Linseed flour | 1-3 |
| Teff flour | 4-6 |
| Sorghum flour | 3-5 |
| Dried yeast | 1-3 |
| Maize starch | 25-30 |
| Potato starch | 7-14 |
| Glucose syrup | 3.5-7 |
| Sugar | 2-4 |
| Hydroxypropylmethylcellulose | 0.2-0.6 |
| Palm oil | 3-9 |
| Salt | 1-2 |
| Brewer's yeast | 1-2 |
| Soy lecithin | 0.8-1.4 |
| Water | 40-60 |

### Example 7

### Dough for gluten-free bread

| Ingredient | % |
|---|---|
| Linseed flour | 1-3 |
| Amaranth flour | 4-6 |
| Sunflower-seed flour | 0.5-2 |
| Dried yeast | 1-3 |
| Maize starch | 25-30 |
| Potato starch | 7-14 |
| Glucose syrup | 3.5-7 |
| Glycerine | 2-3 |
| Guar rubber | 0.2-0.6 |
| Inulin | 2-4 |
| Palm oil | 3-9 |
| Salt | 1-2 |
| Brewer's yeast | 1-2 |
| Soy lecithin | 0.8-1.4 |
| Water | 40-55 |

### Example 8

### Dough for gluten-free crackers

| Ingredient | % |
|---|---|
| Linseed flour | 1-3 |
| Sunflower-seed flour | 0.25-2 |
| Dried yeast | 1-3 |
| Maize starch | 25-40 |
| Rice flour | 15-25 |
| Mono- and di-glycerides of fatty acids | 2-7 |
| Partially fractionated palm oil | 3-8 |
| Partially fractionated coconut oil | 3-8 |
| Modified maize starch | 2-5 |
| Eggs | 1-3 |
| Dextrose | 1-5 |
| Yeast | 0.5-2 |
| Salt | 2-3 |
| Guar-seed flour | 0.5-2 |
| Chemical yeast | 0.7-1.7 |
| Aroma | 0.05-0.3 |
| Water | 40-50 |

### Example 9

### Dough for gluten-free toasted biscuits

| Ingredient | % |
|---|---|
| Linseed flour | 1-3 |
| Sunflower-seed flour | 0.25-2 |
| Dried yeast | 1-3 |
| Maize starch | 25-40 |
| Potato starch | 15-30 |
| Mono- and di-glycerides of fatty acids | 1-3 |
| Palm oil | 3-6 |
| Coconut oil | 3-6 |
| Egg-white | 1-3 |
| Carob-seed flour | 0.5-2 |
| Dextrose | 1-5 |
| Brewer's yeast | 0.5-2 |
| Salt | 1.5-3 |
| Sorbitol syrup | 0.5-2 |
| Aroma | 0.05-0.3 |
| Water | 40-50 |

### Example 10

### Dough for gluten-free biscuits

| Ingredient | % |
|---|---|
| Linseed flour | 1-3 |
| Sunflower-seed flour | 0.25-2 |
| Dried yeast | 1-3 |
| Maize starch | 30-50 |
| Rice flour | 20-40 |
| Sugar | 7-12 |
| Mono- and di-glycerides of fatty acids | 2-5 |
| Palm oil | 3-8 |
| Coconut oil | 3-8 |
| Modified maize starch E1422 | 2-5 |
| Eggs | 1-3 |
| Whole milk powder | 1-3 |
| Brewer's yeast | 0.5-2 |
| Salt | 1.5-3 |
| Guar-seed flour | 0.5-2 |
| Chemical yeast | 0.7-1.7 |
| Aroma | 0.05-0.3 |
| Water | 35-45 |

### Example 11

### Gluten-free bread

| Ingredient | % |
|---|---|
| Linseed flour | 1-3 |
| Sunflower-seed flour | 0.25-2 |
| Dried yeast | 1-3 |
| Tapioca flour | 3-7 |
| Maize starch | 25-30 |
| Potato starch | 7-14 |
| Glucose syrup | 3.5-7 |
| Sugar | 2-4 |
| Xanthan gum | 0.2-0.6 |
| Palm oil | 3-9 |
| Salt | 1-2 |
| Brewer's yeast | 1-2 |
| Soy lecithin | 0.8-1.4 |
| Water | 35-45 |

### Example 12

### Gluten-free crackers

| Ingredient | % |
|---|---|
| Linseed flour | 1-3 |
| Sunflower-seed flour | 0.25-2 |
| Dried yeast | 1-3 |
| Maize starch | 25-40 |
| Rice flour | 15-25 |
| Mono- and di-glycerides of fatty acids | 2-7 |
| Partially fractionated palm oil | 3-8 |
| Partially fractionated coconut oil | 3-8 |
| Modified maize starch | 2-5 |
| Eggs | 1-3 |
| Dextrose | 1-5 |
| Yeast | 0.5-2 |
| Salt | 2-3 |
| Guar-seed flour | 0.5-2 |
| Chemical yeast | 0.7-1.7 |
| Aroma | 0.05-0.3 |
| Water | 20-30 |

### Example 13

### Gluten-free toasted biscuits

| Ingredient | % |
|---|---|
| Linseed flour | 1-3 |
| Sunflower-seed flour | 0.25-2 |
| Dried yeast | 1-3 |
| Maize starch | 25-40 |
| Potato starch | 15-30 |
| Mono- and di-glycerides of fatty acids | 1-3 |
| Palm oil | 3-6 |
| Coconut oil | 3-6 |
| Egg-white | 1-3 |
| Carob-seed flour | 0.5-2 |
| Dextrose | 1-5 |
| Brewer's yeast | 0.5-2 |
| Salt | 1.5-3 |
| Sorbitol syrup | 0.5-2 |
| Aroma | 0.05-0.3 |
| Water | 25-35 |

### Example 14

### Gluten-free biscuits

| Ingredient | % |
|---|---|
| Linseed flour | 1-3 |
| Sunflower-seed flour | 0.25-2 |
| Dried yeast | 1-3 |
| Maize starch | 30-50 |
| Rice flour | 20-40 |
| Sugar | 7-12 |
| Mono- and di-glycerides of fatty acids | 2-5 |
| Palm oil | 3-8 |
| Coconut oil | 3-8 |
| Modified maize starch E1422 | 2-5 |
| Eggs | 1-3 |
| Whole milk powder | 1-3 |
| Brewer's yeast | 0.5-2 |
| Salt | 1.5-3 |
| Guar-seed flour | 0.5-2 |
| Chemical yeast | 0.7-1.7 |
| Aroma | 0.05-0.3 |
| Water | 25-35 |

## Claims

1. Use of a supplement mixture for dietetic food destined for celiacs comprising at least two ingredients of a natural origin rich in vitamins and oligo-elements selected from the group comprising linseed flour, dried yeast, Teff flour, Sorghum flour, Quinoa flour, Cassava flour, Buckwheat, Amaranth and mixtures thereof as an antioxidant additive in the food industry for prolonging the preservation of food products.

2. Use of a supplement mixture according to claim 1, **characterized in that** said supplement mixture comprises at least linseed flour and dried yeast.

3. Use of a supplement mixture according to claim 1 or 2, **characterized in that** it comprises linseed flour, sunflower-seed flour and dried yeast.

4. Use of a supplement mixture according to any of the claims 1-3, **characterized in that** it comprises an effective quantity from a dietetic point of view of iron, zinc, selenium, magnesium, iodine, vitamins of group B, vitamin E, folic acid.

5. Use according to any of the claims 1-4, wherein said food products are gluten-free dietetic products destined for celiacs.

6. Use according to claim 5, wherein said gluten-free dietetic products are cereal-based and/or oven products.

7. Use according to claim 5 or 6, wherein said gluten-free food products are selected from bread, biscuits, toasted biscuits, grissini, pizzas, pasta, snacks, cakes and dough flour kits for preparing oven products.

## Patentansprüche

1. Verwendung einer Ergänzungsmittelmischung für diätische Nahrung, die für Menschen mit Zöliakie bestimmt ist, umfassend mindestens zwei Inhaltsstoffe natürlichen Ursprungs, die reich an Vitaminen und Oligo-Elementen sind, die aus der Gruppe umfassend Leinsamenmehl, getrocknete Hefe, Teffmehl, Sorghummehl, Quinoamehl, Maniokmehl, Buchweizen, Amarant und Mischungen davon ausgewählt sind, als ein Antioxidationsadditiv in der Nahrungsmittelindustrie zur Verlängerung der Konservierung von Nahrungserzeugnissen.

2. Verwendung einer Ergänzungsmittelmischung nach Anspruch 1, **dadurch gekennzeichnet, dass** die genannte Ergänzungsmittelmischung mindestens Leinsamenmehl und getrocknete Hefe umfasst.

3. Verwendung einer Ergänzungsmittelmischung nach Anspruch 1 oder 2, **dadurch gekennzeichnet, dass** sie Leinsamenmehl, Sonnenblumensamenmehl und getrocknete Hefe umfasst.

4. Verwendung einer Ergänzungsmittelmischung nach irgendeinem der Ansprüche 1-3, **dadurch gekennzeichnet, dass** sie von einem diätischen Standpunkt aus eine effektive Menge an Eisen, Zink, Selen, Magnesium, Jod, Vitaminen der Gruppe B, Vitamin E, und Folsäure umfasst.

5. Verwendung nach irgendeinem der Ansprüche 1-4, wobei die genannten Nahrungserzeugnisse glutenfreie diätische Erzeugnisse sind, die für Menschen mit Zöliakie bestimmt sind.

6. Verwendung nach Anspruch 5, wobei die genannten glutenfreien diätischen Erzeugnisse getreidebasierend und/oder Backofenerzeugnisse sind.

7. Verwendung nach Anspruch 5 oder 6, wobei die genannten glutenfreien Nahrungserzeugnisse aus Brot, Keksen, getoasteten Keksen, Grissini, Pizzen, Nudeln, Snacks, Kuchen und Mehlsätzen für Teig für die Herstellung von Backofenerzeugnissen ausgewählt sind.

## Revendications

1. Utilisation d'un mélange de compléments pour aliments diététiques destinés aux malades coeliaques, comprenant au moins deux ingrédients d'origine naturelle, riches en vitamines et en oligo-éléments et choisis dans l'ensemble constitué par de la farine de graines de lin, de la levure desséchée, de la farine de teff, de la farine de sorgho, de la farine de quinoa, de la farine de manioc, du sarrasin et de l'amarante, ainsi que leurs mélanges, en tant qu'adjuvant anti-oxydant, dans l'industrie alimentaire afin de prolonger la durée de conservation de produits alimentaires.

2. Utilisation d'un mélange de compléments, conforme à la revendication 1, **caractérisée en ce que** ledit mélange de compléments comprend au moins de la farine de graines de lin et de la levure desséchée.

3. Utilisation d'un mélange de compléments, conforme à la revendication 1 ou 2, **caractérisée en ce que** ce mélange comprend de la farine de graines de lin, de la farine de graines de tournesol et de la levure desséchée.

4. Utilisation d'un mélange de compléments, conforme à l'une des revendications 1 à 3, **caractérisée en ce que** ce mélange comprend, en quantités efficaces du point de vue diététique, du fer, du zinc, du sélénium, du magnésium, de l'iode, des vitamines du groupe B, de la vitamine E et de l'acide folique.

5. Utilisation conforme à l'une des revendications 1 à 4, lesdits produits alimentaires étant des produits diététiques sans gluten destinés à des malades coeliaques.

6. Utilisation conforme à la revendication 5, lesdits produits diététiques sans gluten étant des produits à base de céréale et/ou cuits au four.

7. Utilisation conforme à la revendication 5 ou 6, lesdits produits alimentaires sans gluten étant choisis parmi les pains, biscuits, biscuits grillés, gressins, pizzas, pâtes alimentaires, biscuits snacks, gâteaux, et sachets de farine à pâte pour préparation de produits cuits au four.
